# EUROPEAN PATENT APPLICATION

(11) **EP 4 715 090 A1**
(43) Date of publication of application: **25.03.2026**
(21) Application number: 25190540.2
(22) Date of filing: 18.07.2025
(51) Int. Cl.: C25B 1/04, C25B 1/23, C25B 11/056, C25B 11/032, C25B 1/27, C25B 3/03, C25B 3/07, C25B 3/26, C25B 9/23, C25B 11/037, C25B 11/052, C25B 11/061, C25B 11/063, C25B 11/065, C25B 11/077, C25B 11/081

(54) **ELECTRODE, MEMBRANE ELECTRODE ASSEMBLY, ELECTROCHEMICAL CELL, STACK, AND ELECTROLYZER**

(30) Priority: 19.09.2024 JP 2024162629
(71) Applicant: Kabushiki Kaisha Toshiba, Tokyo 105-0023 (JP); Toshiba Energy Systems & Solutions Corporation, Saiwai-ku Kawasaki-shi Kanagawa 2120013 (JP)
(72) Inventor: ONO, Akihiko, Tokyo (JP); YOSHINAGA, Norihiro, Tokyo (JP); FUKAZAWA, Taishi, Tokyo (JP); SUGANO, Yoshitsune, Tokyo (JP)
(74) Representative: Marks & Clerk LLP

(57) **Abstract**

An electrode according to an embodiment includes a support comprising metal fibers or metal particles, the support comprising a first surface and a second surface located opposite the first surface and a catalyst layer provided on the metal fibers or the metal particles on the first surface side of the support. An average fiber diameter of the metal fibers and an average primary diameter of the metal particles are denoted as D. A direction from the first surface of the support to the second surface of the support is a thickness direction of the support. The catalyst layer is provided at from the first surface to a position at a minimum depth of 3×D or more and a position at a maximum depth of 10×D or less.

## Description

### FIELD

Embodiments described herein relate generally to an electrode, a membrane electrode assembly, an electrochemical cell, a stack, and an electrolyzer.

### BACKGROUND

In recent years, electrochemical cells have been actively studied. Among electrochemical cells, for example, a polymer electrolyte electrolysis cell (PEMEC) is expected to be used for hydrogen generation in a large-scale energy storage system. In order to ensure sufficient durability and electrolytic properties, platinum (Pt) nanoparticle catalysts are generally used for PEMEC cathodes, and noble metal catalysts such as iridium (Ir) nanoparticle catalysts are used for positive electrodes. Additionally, a method for obtaining hydrogen from ammonia is also considered. In addition, a method for obtaining organic material or carbon monoxide by electrolysis of carbon dioxide is also considered.

### BRIEF DESCRIPTION OF THE DRAWINGS

FIG. 1 is a schematic diagram of an electrode according to an embodiment;
FIG. 2 is a schematic cross-sectional diagram of a catalyst layer according to an embodiment;
FIG. 3 is a partial schematic diagram of an electrode according to an embodiment;
FIG. 4 is a partial schematic diagram of an electrode according to an embodiment;
FIG. 5 is a partial schematic diagram of an electrode according to an embodiment;
FIG. 6 is a partial schematic diagram of an electrode according to an embodiment;
FIG. 7 is a partial schematic diagram of an electrode according to an embodiment;
FIG. 8 is a partial schematic diagram of an electrode according to an embodiment;
FIG. 9 is a partial schematic diagram of an electrode according to an embodiment;
FIG. 10 is a partial schematic diagram of an electrode according to an embodiment;
FIG. 11 shows analysis spots according to an embodiment;
FIG. 12 is a schematic diagram of a membrane electrode assembly according to an embodiment;
FIG. 13 is a partial schematic diagram of a membrane electrode assembly according to an embodiment;
FIG. 14 is a schematic diagram of an electrochemical cell according to an embodiment;
FIG. 15 is a schematic diagram of a stack according to an embodiment;
FIG. 16 is a schematic diagram of an electrolyzer according to an embodiment;
FIG. 17 is a table relating to examples; and
FIG. 18 is a table relating to examples.

### DETAILED DESCRIPTION

An electrode according to an embodiment includes a support comprising metal fibers or metal particles, the support comprising a first surface and a second surface located opposite the first surface and a catalyst layer provided on the metal fibers or the metal particles on the first surface side of the support. An average fiber diameter of the metal fibers and an average primary diameter of the metal particles are denoted as **D.** A direction from the first surface of the support to the second surface of the support is a thickness direction of the support. The catalyst layer is provided at from the first surface to a position at a minimum depth of 3×D or more and a position at a maximum depth of 10×D or less.

Hereinafter, the embodiments will be described with reference to the drawings. It is to be noted that the same reference numerals are given to common components throughout the embodiments, and redundant explanations are omitted.

In the specification, values at 25 [°C] and 1 atm (atmosphere) are shown. Each thickness of the members represents an average of distance in a stacking direction.

The thickness and structure of members described in the specification can be known, for example, from one or more of images obtained by SEM (Scanning Electron Microscope), TEM (Transmission Electron Microscope), HAADF-STEM: High-Angle Annular Dark Field Scanning Transmission Electron Microscopy), and the like. The boundaries of the members described in the specification can be determined from one or more images obtained by scanning electron microscopy or transmission electron microscopy, SEM-EDS (Scanning Electron Microscopy with Energy Dispersive X-ray Spectroscopy) or TEM-EDX (Transmission Electron Microscopy with Energy Dispersive X-ray Spectroscopy), SIMS (Secondary Ion Mass Spectrometry), and the like. The composition of the members described in the specification can be determined by one SIMS, ICP-MS (Inductively Coupled Plasma Mass Spectrometry), SEM-EDX, TEM-EDX, or the like. The crystallinity of the members described in the specification can be evaluated, for example, from XRD (X-ray Diffraction), EBSD (Electron Backscatter Diffraction), images obtained by HAADF-STEM, SEM, TEM or the like. Materials contained in the members described in the specification (crystal defects, bonding states, etc.) can be evaluated from HAADF-STEP, PL (Photoluminescence), XPS (X-ray Photoelectron Spectroscopy), or the like. These analysis methods are examples and do not negate the specific analytical methods described in the specification.

### (FIRST EMBODIMENT)

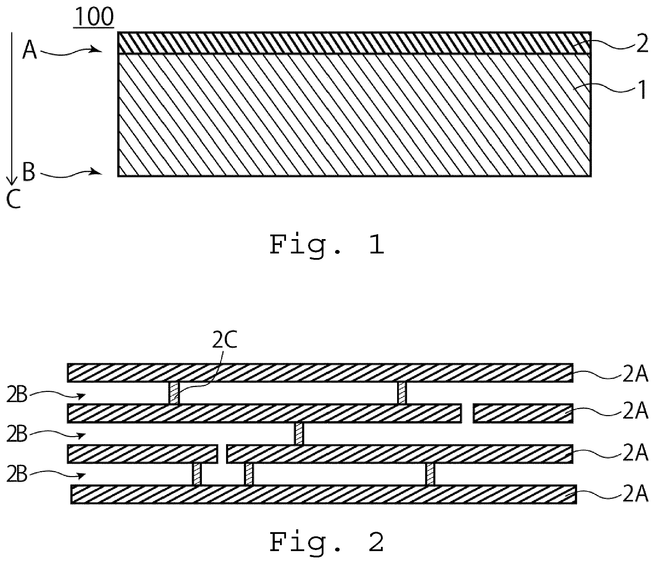

The first embodiment relates to an electrode. A cross-sectional schematic diagram of an electrode 100 according to the embodiment is shown in FIG. **1****.** The electrode 100 includes a support 1 and a catalyst layer **2.** The catalyst layer is provided on the support 1.

In this embodiment, the catalyst layer 2 is used as an electrolysis catalyst. Electrolysis reactions include, for example, generating hydrogen from water or ammonia, or generating ammonia from nitrogen. Electrolysis reactions also include, for example, generating carbon monoxide from carbon dioxide. The catalyst layer 2 is used as a catalyst in these reactions.

The electrode 100 of this embodiment can be used, for example, as an anode for water electrolysis. When a fuel cell catalyst is further included in the catalyst layer 2, the electrode 100 of this embodiment can also be used as an oxygen electrode for a fuel cell. The electrode 100 of this embodiment can also be used as an anode for electrochemically generating ammonia. The electrode of this embodiment can be used as an anode for an electrolyzer for ammonia synthesis. Hereinafter, water electrolysis will be described as an example in the first embodiment and other embodiments; however, the electrode 100 of this embodiment can be used as an anode for a membrane electrode assembly used for ammonia synthesis by electrolysis, where ultrapure water or an electrolyte is supplied to the anode, and water is decomposed at the anode to generate protons and oxygen, protons that have passed through the electrolyte membrane are supplied to the cathode, and ammonia is generated by the combination of protons, electrons, and nitrogen supplied to the cathode. The electrode 100 of this embodiment can also be used as a cathode for generating hydrogen from ammonia by electrolyzing. The electrode of this embodiment can also be used as a cathode for a hydrogen generation device. Hereinafter, water electrolysis will be described as an example in the first embodiment and other embodiments; however, the electrode 100 of this embodiment can be used as a cathode for a membrane electrode assembly used for ammonia decomposition by electrolysis where ammonia is supplied to the cathode, ammonia is decomposed at the cathode to generate protons and nitrogen, protons generated from passing through the electrolyte membrane are supplied to the anode, and hydrogen is generated by the combination of protons and electrons.

As for the support 1, it is preferable to use a material that is porous and has high conductivity. The support 1 is a porous member that allows gases and liquids to pass through.

The support 1 includes metal fibers 1A or metal particles 1B. It is preferable that the support 1 includes metal fibers 1A or metal particles 1B of a valve metal.

The support 1 including metal fibers 1A is a cloth including the metal fibers 1A, preferably. It is preferable that the metal fibers 1A are laminated (Intertwined) in the thickness direction C of the support 1. The cloth including the metal fibers 1A may preferably be a mesh of the metal fibers 1A or a non-woven cloth of the metal fibers 1A.

The support 1 including metal particles 1B is a sintered body in which the metal particles 1B are agglomerated, preferably. It is preferable that the metal particles 1B are laminated in the thickness direction C of the support 1.

The metal fibers 1A preferably include one or more metals selected from the group consisting of titanium, aluminum, tantalum, niobium, hafnium, zirconium, zinc, nickel, platinum, tungsten, bismuth, and antimony. It is more preferable that the metal fibers 1A include titanium which is stable under electrolytic conditions, and it is even more preferable that the metal fibers 1A are made of titanium.

The fiber diameter (diameter) of the metal fibers 1A is preferably 1 [µm] or more and 500 [µm] or less, and is more preferably 1 [µm] or more and 100 [µm] or less when considering reactivity and power supply performance. The average fiber diameter (average diameter) of the metal fibers 1A is preferably 1 [µm] or more and 500 [µm] or less, and is more preferably 1 [µm] or more and 100 [µm] or less when considering reactivity and power supply performance. When the (average) fiber diameter is thicker than the above range, the surface roughness of the catalyst becomes large, and the contact area between a membrane **(e.g.** electrolyte membrane) and the catalyst decreases, which is undesirable. Moreover, although a thinner membrane (electrolyte membrane) contribute to become lower cell resistance, it can also cause electrical shorts such as piercing the membrane. On the other hand, when the (average) fiber diameter is too small, water and electrolyte solution fill the gaps, and gas diffusion deteriorates, which is undesirable.

The metal particles 1B preferably include one or more metals selected from the group consisting of titanium, aluminum, tantalum, niobium, hafnium, zirconium, zinc, nickel, platinum, tungsten, bismuth, and antimony, more preferably include titanium, and even more preferably are made of titanium.

The primary particle diameter (diameter) of the metal particles 1B is preferably 1 [µm] or more and 500 [µm] or less, and is more preferably 1 [µm] or more and 100 [µm] or less when considering reactivity and power supply performance. The average primary particle diameter (average diameter) of the metal particles 1B is preferably 1 [µm] or more and 500 [µm] or less, and is more preferably 1 [µm] or more and 100 [µm] or less when considering reactivity and power supply performance. When the (average) primary particle diameter is larger than the range, the surface roughness of the catalyst becomes large, and the contact area between the membrane and the catalyst decreases, which is undesirable. Moreover, although a thinner membrane contribute to become lower cell resistance, it can also cause electrical shorts such as piercing the membrane. On the other hand, the (average) primary particle diameter is smaller than the range, water and electrolyte solution fill the gaps, and gas diffusion deteriorates, which is undesirable.

The porosity of the support 1 is preferably 30 [vol%] or more and 70 [vol%] or less when considering the movement of substances, and more preferably 40 [vol%] or more and 60 [vol%] or less. When the porosity of the support 1 is high, the catalyst layer 2 tends to be formed deep enough that it cannot contribute to the electrolytic reaction. In addition, water and electrolyte may stagnate in the voids, and gas diffusion may decrease unfavorably. On the other hand, when the porosity of the support 1 is low, the catalyst layer 2 tends to be formed in a thin region of the surface of the support **1.** Moreover, the electrical conductivity deteriorates, resulting in lower reaction efficiency, which is undesirable. Furthermore, it becomes difficult to maintain the physical structure of the support **1,** and cracks are likely to occur, making it unsuitable for handling during transportation or manufacturing as a product due to its lack of structural stability.

The support 1 has a first surface A and a second surface B located opposite the first surface **A.** The first surface A and the second surface B are main surfaces of the support **1.** The first surface A and the second surface B of the support 1 are flat or nearly flat surfaces.

The direction from the first surface A of the support 1 to the second surface B of the support 1 is defined as the thickness direction C of the support **1.** When the first surface A and/or the second surface B are non-flat surfaces, the length of a line segment connecting the average surface of the first surface A to the average surface of the second surface B is defined as the thickness of the support 1. Furthermore, when the first surface A and/or the second surface B are non-flat surfaces, the direction in which the line segment connecting the average surface of the first surface A to the average surface of the second surface B extends is defined as the thickness direction C.

The catalyst layer 2 is provided on the first surface A side of the support 1. The catalyst layer 2 is provided on the surface of the metal fibers 1A or metal particles 1B of the support 1. It is preferable that the catalyst layer 2 is directly provided on the surface of the metal fibers 1A or the metal particles 1B of the support 1.

The catalyst layer 2 preferably includes one or more elements selected from the group consisting of Ir, Ru, Pt, Pd, Ni, Co, Mn, Fe, Cu, V, Au, Cr, Sr, Y, Ag, Sn, W, Zn, Nb, Ta, Zr, Ti, Mo, and Hf. More preferably, the catalyst layer 2 includes one or more oxides containing one or more elements selected from the group consisting of Ir, Ru, Pt, Pd, Ni, Co, Mn, Fe, Cu, V, Au, Cr, Sr, Y, Ag, Sn, W, Zn, Nb, Ta, Zr, Ti, Mo, and Hf.

Preferably, the catalyst layer 2 includes one or more noble metals selected from the group consisting of Ir, Ru, Pt, and Pd. More preferably, the catalyst layer 2 includes one or more elements selected from the group consisting of Ni, Co, Mn, and Fe. Further more preferably, the catalyst layer 2 includes Ni.

Preferably, the catalyst layer 2 is porous. The porosity of the catalyst layer 2 is preferably 10 [vol%] or more and 90 [vol%] or less, and more preferably 30 [vol%] or more and 70 [vol%] or less. When the porosity is lower than the range, water and electrolyte may stagnate in the voids, causing gas diffusion to decrease, which is undesirable. When the porosity is higher than the range, the electrical conductivity deteriorates, reducing the efficiency of the reaction, which is also undesirable. Furthermore, it becomes difficult to maintain the physical structure of the support 1, making cracks and peeling more likely to occur. This makes handling and manufacturing difficult, and the product lacks structural stability, making it undesirable.

The amount of noble metal in the catalyst layer 2 is preferably 0.01 [mg/cm²] or more and 1.0 [mg/cm²] or less, and more preferably 0.05 [mg/cm²] or more and 0.5 [mg/cm²] or less. The sum of the amount can be measured by ICP-MS. It is preferable to reduce the amount of expensive noble metal as much as possible without significantly hindering the reaction.

The thickness of the catalyst layer 2 is preferably 0.1 [µm] or more and 10 [µm] or less, more preferably 0.5 [µm] or more and 5 [µm] or less.

The thickness of the catalyst layer 2 is preferably 0.00002% or more and 10% or less of the thickness of the support 1, and more preferably 0.0005% or more and 0.5% or less.

Preferably, the catalyst layer 2 has a structure in which sheet layers 2A and gap layers 2B are alternately laminated. A schematic cross-sectional diagram of the catalyst layer 2 is shown in FIG. 2. The sheet layers 2A and the gap layers 2B are arranged almost parallel to each other. Although most of the gap layers 2B are void, a part of the sheet layers 2A protrudes and connects with other sheet layers 2A. The sheet layers 2A are connected by columnar bodies 2C present in the gap layers 2B, maintaining the laminated structure.

The sheet layers 2A are layers in which catalyst particles of unsupported metal oxides, for example, are arranged in a sheet-like manner. There are also some voids within the sheet layers 2A. The sheet layers 2A are dense layers containing a large amount of catalyst.

The gap layers 2B are regions sandwiched between the sheet layers 2A and contain catalyst particles of unsupported metal oxides. Unlike the sheet layers 2A, the gap layers 2B do not have a regular structure for the catalyst. The gap layers 2B are regions with low catalyst density.

The average thickness of one layer of the sheet layers 2A is preferably 6 [nm] or more and 50 [nm] or less. The average thickness of one layer of the gap layers 2B is preferably 6 [nm] or more and 50 [nm] or less. Preferably, the average thickness of one layer of the sheet layers 2A is greater than the average thickness of one layer of the gap layers 2B.

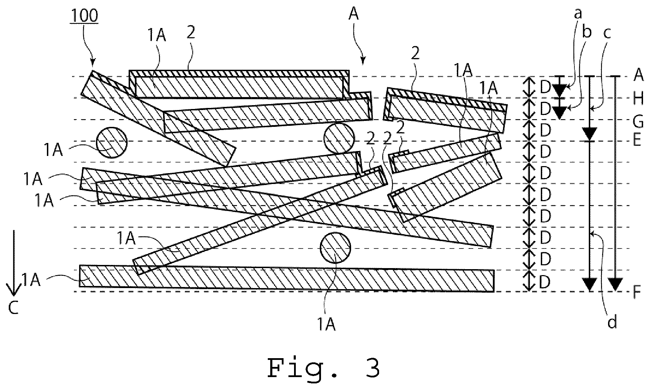

Referring to the partial schematic diagrams of the electrode 100 shown in FIGS. 3 to 10, the position where the catalyst layer 2 is provided on the support 1 will be explained. As in this embodiment, by providing the catalyst layer 2, the durability and electrolytic characteristics of the electrode 100 are improved.

The average fiber diameter of the metal fibers 1A and the average primary diameter of the metal particles 1B are denoted as "D". In this embodiment, the catalyst layer 2 of the electrode 100 is provided at from the first surface A (first starting point) to a position E (first ending point) at a minimum depth of 3×D (three times of D) or more and a position F (second ending point) at a maximum depth of 10×D (ten times of D) or less.

FIG. 3 shows a schematic diagram illustrating the depths H, G, E, and F at positions 1×D, 2×D, 3×D, and 10×D, respectively, of the electrode 100 using the support 1 including metal fibers 1A. The metal fibers 1A are partially overlapping. FIG. 3 shows a range from the first surface A (first starting point) to a depth E (first ending point) of 3×Dand a range from the first surface A (first starting point) to a depth F (second ending point) of 10×D for the support 1 including metal fibers 1A.

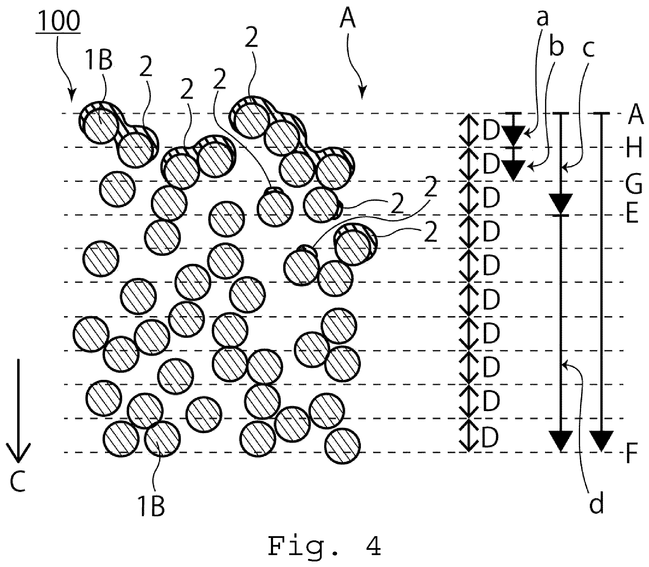

FIG. 4 shows a schematic diagram illustrating the depths H, G, E, and F at positions a depth of 1×D, 2×D, 3×D, and 10×D, respectively, of the electrode 100 using the support 1 including metal particles 1B. A portion of the metal particles 1B are directly contacting each other. FIG. 4 shows a range from the first surface A (first starting point) to a depth E (first ending point) of 3×D and a range from the first surface A (first starting point) to a depth F (second ending point) of 10×D for the support 1 including metal particles 1B.

Preferably, the catalyst layer 2 is also provided on the surface facing opposite direction from the thickness direction C of the support 1.

When the region from the first surface A (first starting point) of the support 1 to a depth H (third ending point) of 1×D in the thickness direction C is defined as a first region a, and when the region from the first surface A (second starting point) to a depth G (fourth ending point) of 2×D in the thickness direction C is defined as a second region b, it is preferable that the average thickness of the catalyst layer 2 in the first region a is greater than the average thickness of the catalyst layer 2 in the second region b. This is because reactions mainly occur near the membrane side of the catalyst layer. Therefore, it is desirable to have more catalyst closer to the first surface. Since reactions mostly proceed up to around the fourth ending point in depth, the contribution of the catalyst at a deeper position to the reaction is small.

The average thickness of the catalyst layer 2 in the second region b is preferably 0.01 times or more and 0.5 times or less the average thickness of the catalyst layer 2 in the first region a, more preferably 0.05 times or more and 0.4 times or less, and even more preferably 0.1 times or more and 0.3 times or less.

A region from the first surface A (first starting point) of the support 1 to a depth E (fifth ending point) of 3×D in the thickness direction C is defined as a third region c. When the region from the first surface A (third starting point) to a depth F (fourth ending point) of 10×D in the thickness direction C is defined as a fourth region d, it is preferable that the average thickness of the catalyst layer 2 in the third region c is greater than the average thickness of the catalyst layer 2 in the fourth region d.

The average thickness of the catalyst layer 2 in the fourth region d is preferably 0.001 times or more and 0.2 times or less the average thickness of the catalyst layer 2 in the third region c, more preferably 0.001 times or more and 0.1 times or less, and even more preferably 0.001 times or more and 0.08 times or less.

It is preferable that the area of the metal fibers 1A where the catalyst layer 2 is provided is the same as or greater than the area of the first surface A (=[length of the first surface A]× [width of the first surface A]). More preferably, the area of the metal fibers 1A where the catalyst layer 2 is provided is 100% or more and 150% or less, of the first surface A and even more preferably, 100% or more and 110% or less of the first surface A.

Similarly, it is preferable that the area of the metal particles 1B where the catalyst layer 2 is provided is the same as or greater than the area of the first surface A. More preferably, the area of the metal fibers 1A where the catalyst layer 2 is provided is 100% or more and 150% or less of the first surface A, and even more preferably, 100% or more and 110% or less of the first surface A.

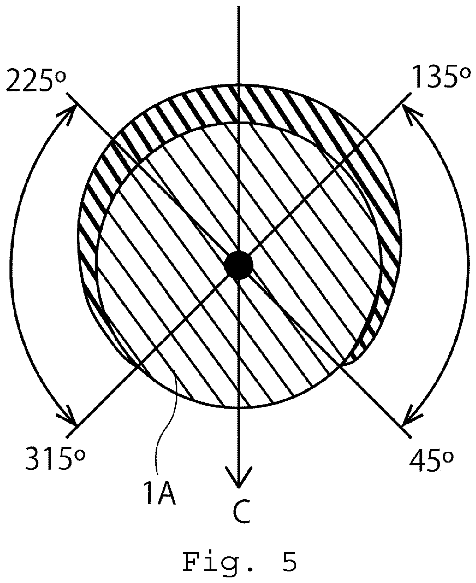

As shown in the partial schematic diagram of the electrode 100 in FIG. 5, it is preferable that the catalyst layer 2 is also provided on the surfaces of the metal fibers 1A along the thickness direction C. The catalyst layer 2 is provided not only on the surface of the metal fibers 1A facing a direction opposite to the thickness direction C but also on the surface of the metal fibers 1A exposed in the thickness direction C of the support 1 which are not covered by the metal fibers 1A. By providing the catalyst layer 2 not only on the surface of the metal fibers 1A facing the direction opposite to the thickness direction C but also on the surfaces along the thickness direction C, the area where the catalyst layer 2 is provided increases, contributing to the improvement of catalyst utilization efficiency.

The surface of the metal fibers 1A along the thickness direction C refers to the surface of the metal fibers 1A within a range of 45° or more and 135° or less and 225° or more and 315° or less, centered on the center of the circumscribed circle of the cross-section approximately aligned with the length direction of the metal fibers 1A, from the thickness direction C (0° angle reference line) of the support 1. It is preferable that the catalyst layer 2 is also provided on the surface of the metal fibers 1A within a range of 45° or more and 135° or less and a range of 225° or more and 315° or less from the thickness direction C (0° angle reference line) of the support 1, with the center of the circumscribed circle of the cross section approximately along the length direction of the metal fibers 1A as the center. The catalyst layer 2 is also preferably provided on the surface (first surface A side) of the metal particles 1B within a range of more than 135° and less than 225° centered on the center of the circumscribed circle of the cross-section of the metal fibers 1A (the thickness direction C is 0° angle reference line).

The catalyst layer 2 provided on the surface of the metal fibers 1A on the side along the thickness direction C is preferably 30 [wt%] or more and 90 [wt%] or less of the entire catalyst layer 2 (the ratio of the entire catalyst layer 2 is defined as 100 [wt%]), more preferably 40 [wt%] or more and 85 [wt%] or less, and even more preferably 50 [wt%] or more and 80 [wt%] or less.

It is preferable that the catalyst layer 2 provided on the surface of the metal fibers 1A on the side along the thickness direction C also has the structure in which sheet layers 2A and gap layers 2B are alternately laminated.

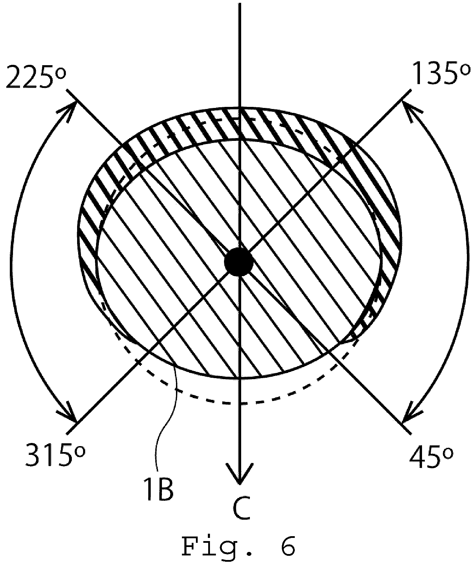

As shown in the partial schematic diagram of the electrode 100 in FIG. 6, it is preferable that the catalyst layer 2 is also provided on the surface of the metal particles 1B on the side along the thickness direction C. The catalyst layer 2 is provided not only on the surface of the metal particles 1B facing the direction opposite to the thickness direction C but also on the surface of the metal particles 1B exposed in the thickness direction C of the support 1 which are not covered by the metal particles 1B. By providing the catalyst layer 2 not only on the surface of the metal particles 1B in the portion where the metal particles 1B do not cover the thickness direction C of the support 1, but also on the surface of the metal particles 1B along the thickness direction C, the area where the catalyst layer 2 is provided is increased, contributing to improvement of catalytic efficiency and the like. Note that the cross section of the metal particles 1B may correspond to a cross section perpendicular to the direction along the length of the metal fibers 1A.

The surface of the metal particles 1B along the thickness direction C is the surface of the metal particles 1B within a range of 45° or more and 135° or less and a range of 225° or more and 315° or less from the thickness direction C (0° angle reference line) of the support 1, with the center of the circumscribed circle (chain line) of the cross section of the metal particles 1B. It is preferable that the catalyst layer 2 is provided on the surface of the metal particles 1B within a range of 45° or more and 135° or less and a range of 225° or more and 315° or less from the thickness direction C (0° angle reference line) of the support 1, with the center of the circumscribed circle of the cross section of the metal particles 1B as the center. The catalyst layer 2 is also provided on the surface of the metal particles 1B (the first surface A side) within a range larger than 135° and less than 225° from the thickness direction C (0° angle reference line) of the support 1, with the center of the circumscribed circle of the cross section of the metal particles 1B as the center.

It is preferable that the catalyst layer 2 provided on the surface of the metal particles 1B along the thickness direction C is 30 [wt%] or more and 90 [wt%] or less of the entire catalyst layer 2 (the ratio of the entire catalyst layer 2 is defined as 100 [wt%]), more preferably 40 [wt%] or more and 85 [wt%] or less, and even more preferably 50 [wt%] or more and 80 [wt%] or less.

It is preferable that the catalyst layer 2 provided on the surface of the metal particles 1B along the thickness direction C also has the structure in which sheet layers 2A and gap layers 2B are alternately laminated.

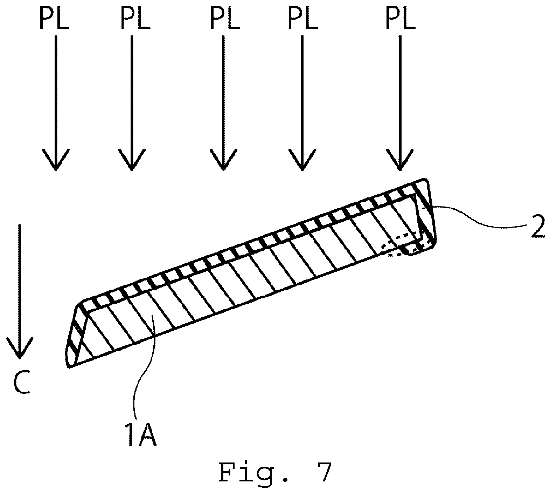

As shown in the partial schematic diagram of the electrode 100 in FIG. 7, it is preferable that the catalyst layer 2 is also provided on the surface of the metal fibers 1A in a direction facing the second surface B side of the support 1 in which the direction facing the second surface B side of the support 1 extends to the second surface B side from a direction vertical to the thickness direction C of the support 1 but excluding the vertical direction.

The surface of the metal fibers 1A facing the second surface B side of the support 1 is the backside surface of the metal fibers 1A (the surface of the metal fibers 1A in the portion where polarized light PL irradiated along the thickness direction C casts a shadow of the electrode 100 (the support 1)). It is preferable that the catalyst layer 2 is also provided on the surface of the metal fibers 1A in the portion (enclosed by chain line) where polarized light PL irradiated along the thickness direction C casts a shadow of the electrode 100 (the support 1).

It is preferable that the catalyst layer 2 provided on the surface of the metal fibers 1A facing the second surface B side of the support 1 is 1 [wt%] or more and 50 [wt%] or less of the entire catalyst layer 2 (the ratio of the entire catalyst layer 2 is defined as 100 [wt%]), more preferably 2 [wt%] or more and 40 [wt%] or less, and even more preferably 5 [wt%] or more and 30 [wt%] or less.

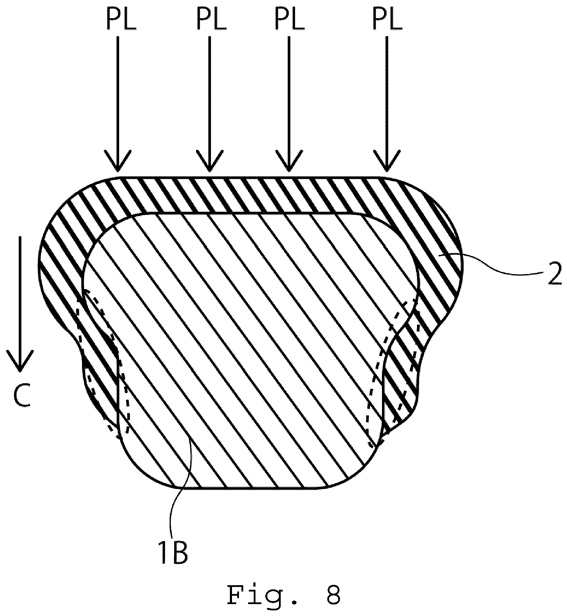

As shown in the partial schematic diagram of the electrode 100 in FIG. 8, it is preferable that the catalyst layer 2 is also provided on the surface of the metal particles 1B facing the second surface B side of the support 1 in which the direction facing the second surface B side of the support 1 extends to the second surface B side from a direction vertical to the thickness direction C of the support 1 but excluding the vertical direction. Note that the cross section of the metal particles 1B may correspond to a cross section perpendicular to the direction along the length of the metal fibers 1A.

It is preferable that the catalyst layer 2 provided on the surface of the metal fibers 1A facing the second surface B side of the support 1 also has the structure in which sheet layers 2A and gap layers 2B are alternately laminated.

The surface of the metal particles 1B facing the second surface B side of the support 1 is the backside surface of the metal particles 1B (the surface of the metal particles 1B in the portion where polarized light PL irradiated along the thickness direction C casts a shadow of the electrode 100 (the support 1)). It is preferable that the catalyst layer 2 is also provided on the surface of the metal particles 1B in the portion (enclosed by chain line) where polarized light PL irradiated along the thickness direction C casts a shadow of the electrode 100 (the support 1).

It is preferable that the catalyst layer 2 provided on the surface of the metal particles 1B facing the second surface B side of the support 1 is 1 [wt%] or more and 50 [wt%] or less of the entire catalyst layer 2 (the ratio of the entire catalyst layer 2 is defined as 100 [wt%]), more preferably 2 [wt%] or more and 45 [wt%] or less, and even more preferably 5 [wt%] or more and 40 [wt%] or less.

It is preferable that the catalyst layer 2 provided on the surface of the metal particles 1B facing the second surface B side of the support 1 also has the structure in which sheet layers 2A and gap layers 2B are alternately laminated.

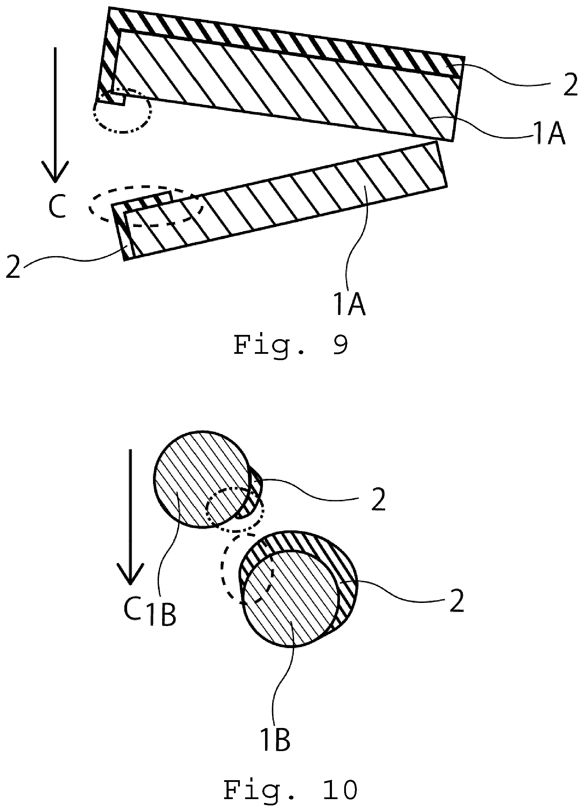

As shown in the partial schematic diagram of the electrode 100 in FIG. **9****,** it is preferable that the electrode 100 includes both the catalyst layer 2 (roughly enclosed by two-dotted chain line) provided on the surface where the metal fibers 1A faces to the second surface B side of the support 1 and the catalyst layer 2 (enclosed by chain line) facing to the opposite direction to the thickness direction C of the support 1.

It is preferable that the total amount of the catalyst layer 2 provided on the surface of the metal fibers 1A facing the second surface B side of the support 1 is 3 [wt%] or more and 30 [wt%] or less of the entire catalyst layer 2 (the ratio of the entire catalyst layer 2 is defined as 100 [wt%]), more preferably 4 [wt%] or more and 25 [wt%] or less, and even more preferably 5 [wt%] or more and 20 [wt%] or less.

It is preferable that both the catalyst layer 2 provided on the surface of the metal fibers 1A facing the second surface B side of the support 1 and the catalyst layer 2 facing to the opposite direction to the thickness direction C of the support 1 have a structure in which sheet layers 2A and gap layers 2B are alternately laminated.

As shown in the partial schematic diagram of the electrode 100 in FIG. 10, it is preferable that the electrode 100 includes both the catalyst layer 2 (roughly enclosed by two-dotted chain line) provided on the surface of the metal particles 1B facing the second surface B side and the catalyst layer 2 (enclosed by dashed lines) facing to the opposite direction to the thickness direction C of the support **1.** Note that the cross-section of the metal particles 1B may correspond to a cross-section perpendicular to the length direction of the metal fibers 1A.

It is preferable that the total amount of the catalyst layer 2 provided on the surface of the metal particles 1B facing the second surface B side of the support 1 and the catalyst layer 2 facing to the opposite direction to the thickness direction C of the support 1 is 3 [wt%] or more and 40 [wt%] or less of the entire catalyst layer **2,** more preferably 4 [wt%] or more and 35 [wt%] or less, and even more preferably 5 [wt%] or more and 30 [wt%] or less.

It is preferable that both the catalyst layer 2 provided on the surface of the metal particles 1B and the catalyst layer 2 facing to the opposite direction to the thickness direction C of the support 1 have a structure in which sheet layers 2A and gap layers 2B are alternately laminated.

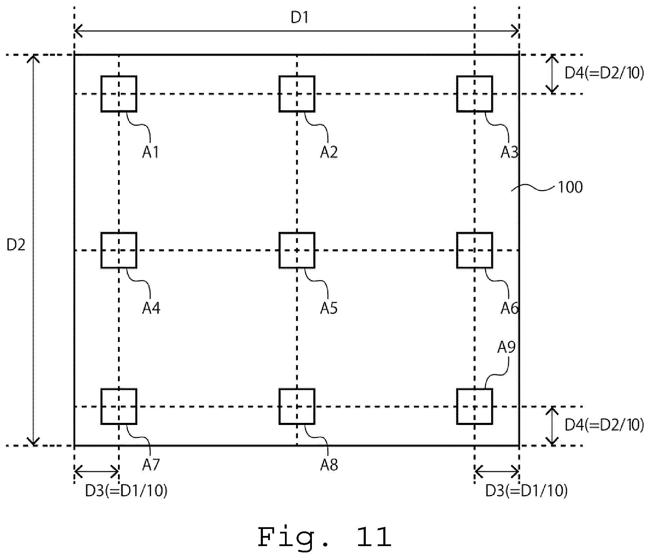

The region where the catalyst layer 2 is provided and the ratio of that site can be determined by observing the cross-section of multiple analysis spots. As shown in FIG. 11, when the length D1 and width D2 (D1 ≥ D2) of the electrode 100 are defined, virtual lines are drawn inward from each of the two sides facing in the width direction of the electrode 100 at a distance of D3 (= D1/10), and virtual lines are drawn inward from each of the two sides facing in the length direction of the electrode 100 at a distance of D4 (= D2/10). Further, a virtual line is drawn parallel to the width direction passing through the center of the electrode 100, and a virtual line is drawn parallel to the length direction passing through the center of the electrode 100. The analysis spots A1 to A9 are defined as the areas centered on the nine intersection points of the virtual lines. Each spot has a square shape with an area of at least 1 [mm²]. The observation cross-section by SEM is perpendicular to the plane shown in FIG. 11 and parallel to the width direction. The thickness of each gap layer 2B at each analysis spot A1 to A9 is determined at intervals of 50 [nm] in the width direction of the SEM image. As for the ratio of the catalyst layer 2 being provided at a specific location, the average value of each spot is calculated. The ratio of the catalyst layer 2 being provided at a specific location can be determined from the volume of the catalyst layer 2 and the ratio. Further, the composition of the support 1 and the catalyst layer 2 is determined by SEM-EDX analysis.

Next, an example of a manufacturing method for the electrode 100 will be described. Sheet layer precursors, which are substantially sheet layers 2A precursors, and gap layer precursors, which are substantially gap layers 2B precursors, are alternately sputtered onto the support 1 by sputtering. When forming the sheet layer precursor and the gap layer precursor, sputtering is also performed at an inclined angle with respect to the thickness direction C of the support 1 (including both sputtering in the thickness direction C of the support 1 and sputtering from an inclined angle with respect to the thickness of the support 1). This allows for the formation of the catalyst layer 2 on the portion exposed on the side opposite the thickness direction C of the support 1 and on the non-exposed portions **(e.g.** on the second surface B side). At this time, the sheet layer precursors and the gap layer precursors are formed in an oxidizing atmosphere. The laminated body in which the sheet layer precursors and the gap layer precursors are alternately laminated is treated with a solution in which the gap layers 2B precursor is selectively dissolved. For example, the solution is sulfuric acid. After the solution treatment, a heat treatment is optionally performed in an oxidizing atmosphere to obtain the electrode 100.

The inclined angle with respect to the thickness direction C of the support 1 when forming the sheet layer precursor and the gap layer precursor preferably includes an angle inclined 1° or more and 179° or less with respect to the surface direction of the support **1,** more preferably 5° or more and 120° or less, and even more preferably 10° or more and 90° or less, or/and 90° or more and 170° or less. It is further preferable to include angles of 10° or more and less than 90°, or/and angles greater than 90° and 170° or less. Since the sputtering efficiency of the catalyst becomes poor when sputtering at a very shallow angle (e.g., 1°), it is preferable that the inclination angle be relatively deep. Considering uniform sputtering at all the above angles, film formation by moving the target or a sputtering base involves difficulties in applying voltage only to the target at a specific angle, and therefore, it is preferable to sputter from angles including shallow angles. On the other hand, when sputtering is performed only at an angle close to vertical (90°) with respect to the surface of the support 1, the catalyst will not be formed on the side surfaces and back sides of the fibers or metal particles. Therefore, it is desirable that the sputtering angle includes 90° and an angle other than 90° while being less than 90°.

The electrode 100 according to this embodiment has the catalyst layer 2 provided over a wide area of the surface of the support 1. The electrode 100 according to this embodiment exhibits high durability and high electrolysis characteristics as an electrode for electrolysis.

### (SECOND EMBODIMENT)

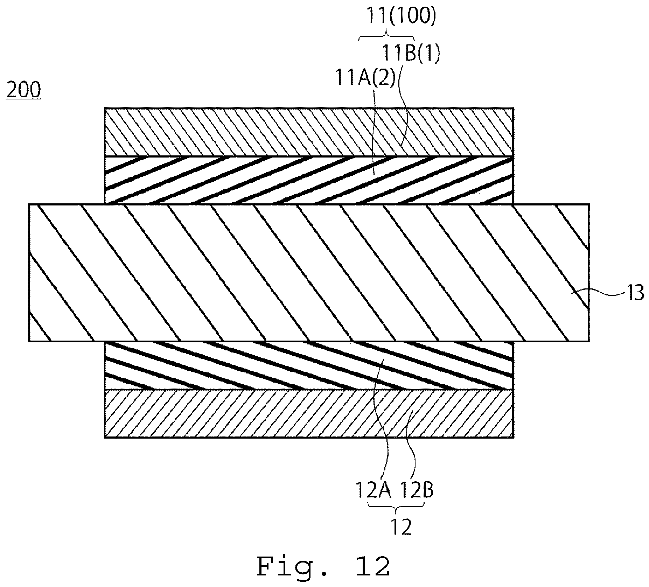

The second embodiment relates to a membrane electrode assembly (MEA). FIG. 12 shows a schematic diagram of the membrane electrode assembly 200 according to this embodiment. The membrane electrode assembly 200 has a first electrode 11, a second electrode 12, and an electrolyte membrane 13. The first electrode 11 is preferably an anode electrode, and the second electrode 12 is preferably a cathode electrode. It is preferable to use the electrode 100 according to the first embodiment for either the first electrode 11 or the second electrode 12. The membrane electrode assembly 200 according to this embodiment is preferably used in an electrochemical cell or stack that performs hydrogen generation or oxygen generation.

The first electrode 11 has a first support 11B and a first catalyst layer 11A. The first catalyst layer 11A is provided on the first support 11B. Preferably, the first catalyst layer 11A directly contacts the electrolyte membrane 13. When the electrode 100 is used as the first electrode 11, the first catalyst layer 11A is the catalyst layer 2, and the first support 11B is the support 1.

The second electrode 12 has a second support 12B and a second catalyst layer 12A. The second catalyst layer 12A is provided on the second support 12B. The second catalyst layer 12A is located on the side of the electrolyte membrane 13. Preferably, the second catalyst layer 12A directly contacts the electrolyte membrane 13.

It is preferable to use a porous and highly conductive material for the second support 12B. The second support 12B is a porous member that allows gas or liquid to pass through. For example, the second support 12B may be carbon paper or metal mesh. As the metal mesh, a porous base material of valve metal is preferable. Preferably, the porous base material of valve metal includes one or more metals selected from the group consisting of titanium, aluminum, tantalum, niobium, hafnium, zirconium, zinc, tungsten, bismuth, and antimony, or a porous base material of an metal element selected from the group consisting of titanium, aluminum, tantalum, niobium, hafnium, zirconium, zinc, tungsten, bismuth, and antimony. The second support 12B may have a carbon layer (MPL layer) containing carbon particles and a water-repellent resin (PTFE or Nafion or other fluoropolymer). The carbon layer is preferably disposed between the carbon paper and the second catalyst layer 12A, for example.

The second catalyst layer 12A comprises a catalytic metal. Preferably, the second catalyst layer 12A comprises catalyst metal particles in which the catalyst metal is not supported by a carrier. It is preferable that the second catalyst layer 12A be a porous catalyst layer. While not particularly limited, the catalytic metal may include one or more selected from the group consisting of Pt, Rh, Os, Ir, Pd, and Au. Such catalytic materials preferably include one or more selected from the group consisting of Pt, Rh, Os, Ir, Pd, and Au. The catalytic metal is preferably a metal, alloy, or metal oxide. The second catalyst layer 12A preferably has a plurality of catalyst units in which sheet-like catalyst layers and gap layers are alternately laminated.

The amount of metal per unit area of the second catalyst layer 12A is preferably 0.02 [mg/cm²] or more and 1.0 [mg/cm²] or less, more preferably 0.05 [mg/cm²] or more and 0.5 [mg/cm²] or less. The total mass can be measured by ICP-MS.

The porosity of the second catalyst layer 12A is preferably 10 [vol%] or more and 90 [vol%] or less, more preferably 30 [vol%] or more and 70 [vol%] or less.

The electrolyte membrane 13 is preferably a proton-conducting membrane. As the electrolyte membrane 13, a fluorine-based polymer or an aromatic hydrocarbon-based polymer having one or more groups selected from the group consisting of sulfonic acid groups, sulfonimide groups, and sulfuric acid groups is preferable. As the electrolyte membrane 13, a fluorine-based polymer having a sulfonic acid group is preferable. Examples of fluorine-based polymers having sulfonic acid groups include Nafion (trademark, DuPont), Flemion (trademark, Asahi Kasei Corporation), Cermemion (trademark, Asahi Kasei Corporation), Aquivion (trademark; Solvay Specialty Polymers) or Aciplex (trademark, Asahi Glass Co., Ltd.). Alternatively, an anion exchange membrane, a porous membrane, and various other conductive membranes may be used instead of the proton-conducting membrane.

The thickness of the electrolyte membrane 13 can be appropriately determined considering characteristics such as membrane permeability and durability. From the viewpoint of strength, solubility, and MEA output characteristics, the thickness of the electrolyte membrane 13 is preferably 20 [µm] or more and 500 [µm] or less, more preferably 50 [µm] or more and 300 [µm] or less, and even more preferably 80 [µm] or more and 200 [µm] or less.

It is preferable that the membrane electrode assembly 200 does not contain ionomer. Preferably, the membrane electrode assembly 200 does not contain ionomer, for example, coated on the surface of the electrode side.

It is preferable that the electrolyte membrane 13 includes a noble metal region on the first electrode 11 side. The noble metal region contains noble metal particles. Preferably, the noble metal region exists on the surface of the electrolyte membrane 13. The noble metal region is preferably configured as one region, but may be configured as multiple separate regions.

The noble metal particles are preferably particles of one or more noble metals selected from the group consisting of Pt, Re, Rh, Ir, Pd, and Ru. The noble metal particles may include alloy particles containing one or more noble metals selected from the group consisting of Pt, Re, Rh, Ir, Pd, and Ru. The noble metal particles are preferably particles of a single noble metal selected from the group consisting of Pt, Re, Rh, Ir, Pd, and Ru. The noble metal particles are preferably Pt particles. The noble metal particles are preferably Re particles. The noble metal particles are preferably Rh particles. The noble metal particles are preferably Ir particles. The noble metal particles are preferably Pd particles. The noble metal particles are preferably Ru particles.

The noble metal particles oxidize hydrogen passing through the electrolyte membrane 13 on the cathode side. The noble metal particles can suppress hydrogen leakage. Since the noble metal particles exist on the anode side, it is difficult to oxidize hydrogen discharged from the cathode side. The region where the noble metal particles exist may also exist in the electrolyte membrane 13 on the second electrode 12 (cathode) side.

The average circumscribed circle diameter of the noble metal particles is preferably 0.5 [nm] or more and 50 [nm] or less, more preferably 1 [nm] or more and 10 [nm] or less, and even more preferably 1 [nm] or more and 5 [nm] or less.

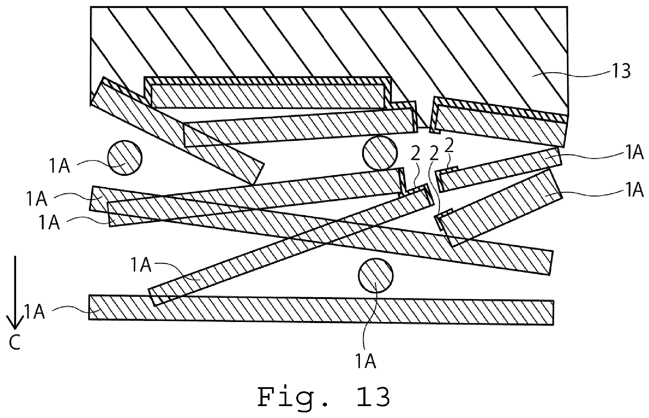

FIG. 13 shows a cross-sectional diagram of the membrane electrode assembly 200. FIG. 13 illustrates an embodiment in which the electrode 100 is used for the first electrode 11. Even when a portion of the catalyst layer 2 is not in direct contact with the electrolyte membrane 13, the catalyst layer 2 can contribute to the electrolytic reaction because it exists in a relatively shallow region from the first surface A of the support 1 and water diffused into the support 1 is present.

Preferably, 3 [wt%] or more and 50 [wt%] or less of the entire catalyst layer 2 does not directly contact the electrolyte membrane 13, more preferably 5 [wt%] or more and 40 [wt%] or less, and even more preferably 5 [wt%] or more and 30 [wt%] or less.

Using the electrode 100 having high durability and performance for the anode of the membrane electrode assembly 200 enables long-term operation with high activity.

### (THIRD EMBODIMENT)

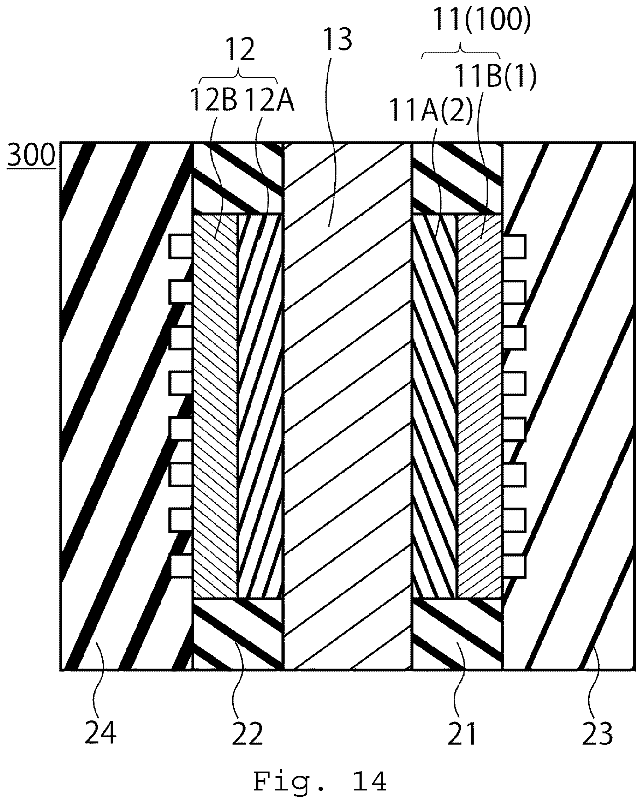

A third embodiment relates to an electrochemical cell. FIG. 14 shows a cross-sectional diagram of an electrochemical cell 300 of the second embodiment. While water electrolysis is used as an example to explain the electrochemical cell 300, it is possible to decompose ammonia or other substances besides water to generate hydrogen.

As shown in FIG. 14, the electrochemical cell 300 of the second embodiment comprises the first electrode (anode) 11, the second electrode (cathode) 12, the electrolyte membrane 13, gaskets 21 and 22, separators 23 and 24. A seal material for the first electrode 11 can be used as the gasket 21. A seal material for the second electrode 12 can be used as the gasket 22.

It is preferable to use the membrane electrode assembly (MEA) 200 in which the first electrode (anode) 11, the second electrode (cathode) 12, and the electrolyte membrane 13 are joined. An anode power supply may be separately provided with separator 23. A cathode power supply may be separately provided with separator 24.

In the electrochemical cell 300 shown in FIG. 14, a power source (not shown) connects separators 23 and 24, and a reaction occurs at the first electrode 11 and the second electrode 12. For example, water is supplied to the first electrode 11, and at the first electrode 11, water is decomposed into protons, oxygen, and electrons. The support member and current collector of the electrode are porous members, which function as flow plates. The generated water and unreacted water are discharged, and the generated protons and electrons are used for the cathode reaction. In the cathode reaction, protons and electrons react to generate hydrogen. The generated hydrogen and oxygen, or either one, can be used as fuel for a fuel cell, for example.

### (FOURTH EMBODIMENT)

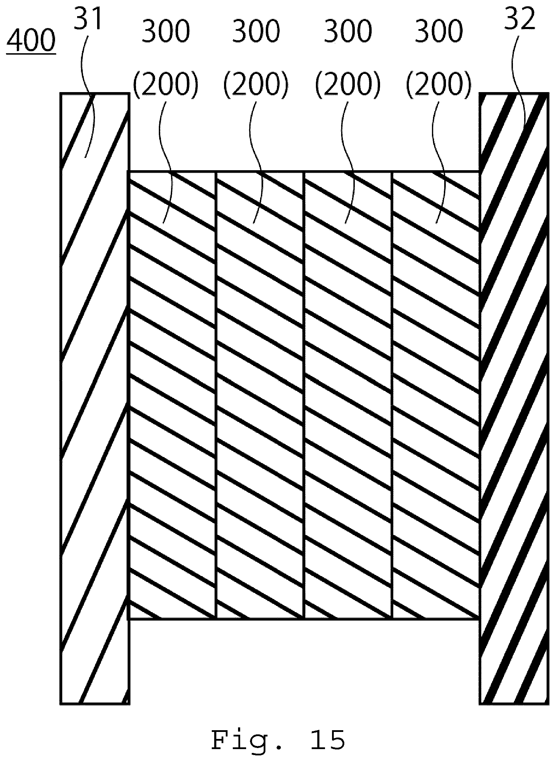

A fourth embodiment relates to a stack. FIG. 15 is a schematic cross-sectional diagram of the stack 400 according to the fourth embodiment. The stack 400 according to the third embodiment shown in FIG. 15 comprises multiple MEA 200 or electrochemical cells 300 connected in series. Clamping plates 31 and 32 are attached to both ends of the MEAs and electrochemical cells.

Since the amount of hydrogen generated by a single electrochemical cell 300 comprising one MEA 200 is small, a stack 400 comprising multiple MEAs 200 or multiple electrochemical cells 300 connected in series can generate a large amount of hydrogen.

### (FIFTH EMBODIMENT)

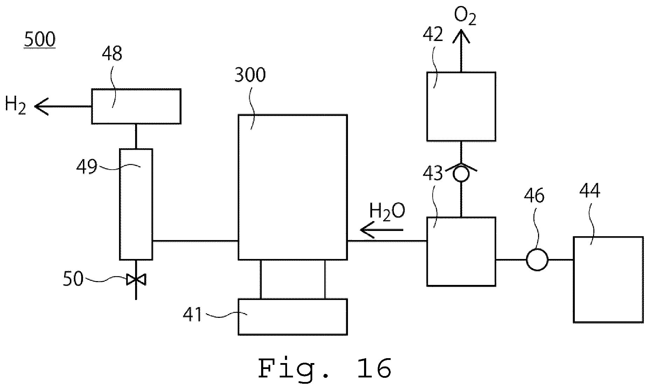

A fifth embodiment relates to an electrolyzer. FIG. 16 shows a conceptual diagram of the electrolyzer according to the fifth embodiment. The electrochemical cell 300 or stack 400 is used in the electrolyzer 500 shown in FIG. 16. The electrolyzer in FIG. 16 is for water electrolysis. An explanation for water electrolyzing will be described. For example, when hydrogen is to be generated from ammonia, it is preferable to adopt a different configuration device using electrode 100. The electrodes of this embodiment can also be used in an electrolyzer that electrochemically decomposes carbon dioxide into organic substances such as methanol and ethylene, or carbon monoxide.

As shown in FIG. 16, a stack 400 comprising multiple single cells for water electrolysis connected in series is used. A power supply 41 is attached to the stack 400, and voltage is applied between the anode and cathode. A gas-liquid separator 42 and mixing tank 43 are connected to the anode side of the stack 400, to separate the generated gas from unreacted water. An ion exchange water production apparatus 44 supplies water to the mixing tank 43 via a pump 46. The mixed solution is circulated back to the anode through a check valve 47 from the gas-liquid separator 42. Oxygen generated at the anode passes through the gas-liquid separator 42 to obtain oxygen gas. On the cathode side, a hydrogen purifier 49 is connected continuously to the gas-liquid separator 48 to obtain high-purity hydrogen. Impurities are discharged through a pathway having valve 50. The operating temperature can be controlled stably by heating the stack and mixing tank. It is possible to control heating for the stack and the mixing tank, and the current density during thermal decomposition, etc.

The following examples will further illustrate the invention based on specific embodiments. However, these embodiments are not intended to limit the scope of the invention.

### (Example A)

### (Example A-1)

A nonwoven cloth of titanium metal fibers with a porosity of 60 [vol%] and a thickness of 200 [µm] is used as a support, and a catalyst layer is formed on the support. The catalyst layer has a structure in which sheet layers and gap layers are stacked alternately 40 times each. Sheet layer precursors containing Ir oxide and gap layer precursors containing Ni oxide are alternately formed by sputtering in an oxidizing atmosphere at an angle varying within a range of 1° to 179° with respect to the surface direction of the support (INCLINED denoted in the Table). The loading density of precious metals is set to 0.1 [mg/cm²]. Subsequently, most of the gap layer precursors are selectively dissolved with sulfuric acid to obtain the electrode of this embodiment. The obtained electrode is used as an anode.

An electrode is obtained by forming a porous catalytic layer containing Pt on a carbon paper as a support. The obtained electrode is used as a cathode. The loading density of noble metals is set to 1 [mg/cm²].

A membrane electrode assembly (MEA) is obtained by sandwiching a Nafion membrane as an electrolyte membrane between the obtained anode and cathode and pressing them together. The obtained MEA is placed between two flow path separators, and the gasket-sealed MEA is fixed to obtain an electrochemical cell. Water electrolysis operation is performed for 5000 hours at a measurement temperature of 80 [°C] and a current density of 2 [A/cm²] on the obtained electrochemical cell to evaluate durability and cell voltage.

### (Example A-2 to Example A-7, Comparative Example A-1 to A-7)

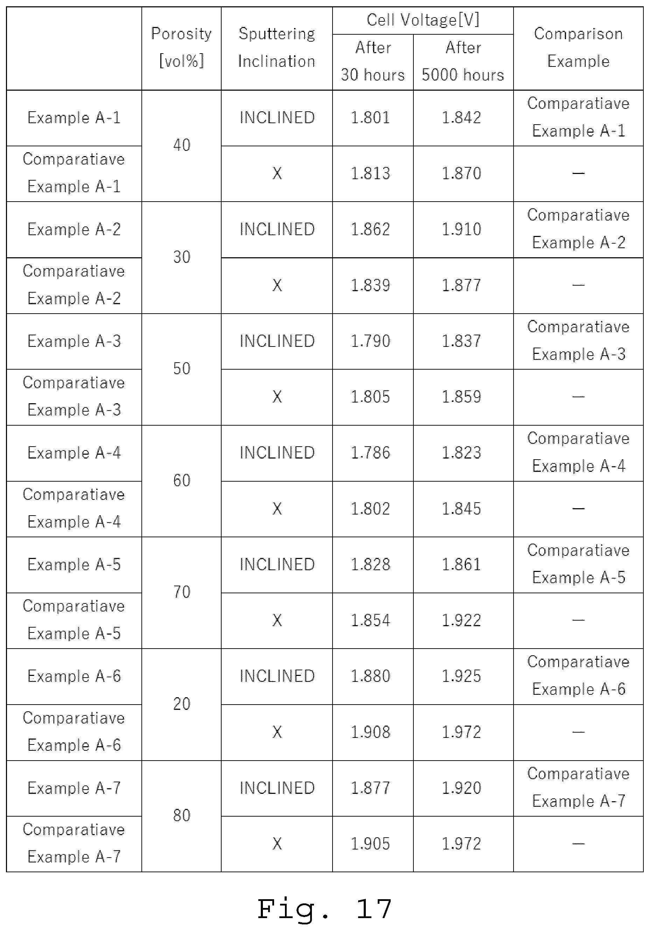

An anode is obtained similarly to Example A-1 using a support with porosity shown in FIG. 17 (Table). For comparative examples where "X" is written in the columns of sputtering inclination of FIG. 17 (Table), sheet layer precursors and gap layer precursors are formed by fixing them at an angle of 90° with respect to the surface direction of the support 1. An electrochemical cell is obtained similarly to Example A-1, and the cell voltage is evaluated 30 hours after the start of water electrolysis operation and after 5000 hours. The porosity, sputtering inclination, cell voltages 30 hours and 5000 hours after the start of water electrolysis, and comparison examples for examples are summarized in FIG. 17 (Table).

As shown in FIG. 17 (Table), all single cells using electrodes according to the examples showed good cell voltage 30 hours after the start of operation and high performance. The result shows that for comparative examples where the catalyst layer is not sputtered with inclination and the porosity is within a range of 30 [vol%] or more and 70 [vol%] or less, the cell voltage 30 hours after the start of operation is low. After 5000 hours of operation, the increase in cell voltage is suppressed in cases using electrodes according to the examples. However, for comparison examples, even when the cell voltage 1 hour after the start of operation is sufficiently low, the cell voltage increase rate or the cell voltage after 5000 hours of operation is higher than that of the examples. The results show that all electrodes according to the examples exhibit high durability and high electrolysis performance.

Despite not being shown explicitly in Table of FIG. 17, the anode according to the example has a catalytic layer formed not only on the surface side of the titanium fibers but also in the region of the first side of the support, on some side surfaces and some bottom sides of the titanium fibers, as illustrated in the schematic diagrams of FIGS. 5, 7, and 9. This catalyst layer formation is not present in the anode according to the comparative example.

### (Example B)

### (Example B-1)

A sintered body of titanium metal particles with a porosity of 40 [vol%] and a thickness of 200 [µm] is used as a support, and a catalyst layer is formed on the base material. The catalyst layer has a structure in which 40 sheet layers and gap layers are alternately laminated. Sheet layers containing iridium oxide and gap layers containing nickel oxide are alternately formed by sputtering in an oxidizing atmosphere at an angle varying within the range of 0° to 178° with respect to the thickness direction of the base material. The loading density of noble metals is set to 0.05 [mg/cm²]. Subsequently, most of the gap layer precursor is selectively dissolved with sulfuric acid to obtain the electrode according to this embodiment. The obtained electrode is used as an anode.

An electrochemical cell is fabricated using the obtained electrode and water electrolysis operation is performed to evaluate its characteristics, similar to Example A.

### (Examples B-2 to B-5, Comparative Examples B-1 to B-5)

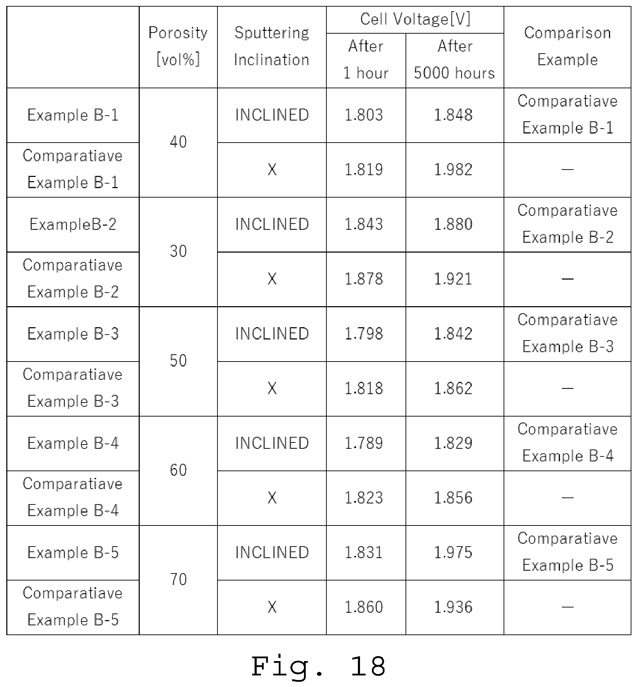

Anodes are obtained similarly to Example B-1 each using a support with porosities shown in Table 18. For comparative examples where "X" is written in the columns of sputtering inclination of FIG. 17 (Table), sheet layer precursors and gap layer precursors are formed by fixing them at an angle of 90° with respect to the thickness direction of the support 1. Electrochemical cells are obtained similarly to Example B-1 and cell voltage is evaluated after 1 hour and 5000 hours from the start of water electrolysis operation. The porosity, sputtering inclination, cell voltages 30 hours and 5000 hours after the start of water electrolysis, and comparison examples for examples are summarized in FIG. 18 (Table).

As shown in Table of FIG. 18, electrochemical cells using electrodes according to the examples all exhibited good cell voltage after 1 hour from the start of operation, indicating high performance. For comparative examples where the porosity is within the range of 30 [vol%] or more and 70 [vol%] or less, even without forming a catalyst layer precursor by sputtering with inclination, the cell voltage after 1 hour is found to be low. After 5000 hours of operation, the increase in cell voltage is suppressed when using electrodes according to the examples. However, for comparative examples, even when the cell voltage after 1 hour of operation is sufficiently low, the cell voltage rise or cell voltage itself became higher than that of the examples after 5000 hours of operation. This represents that the electrodes according to the examples all exhibit high durability and high electrolysis characteristics.

Despite not being shown explicitly in Table of FIG. 18, the anode according to the example has a catalytic layer formed not only on the surface side of the titanium particles but also in the region of the first side of the support, on some side surfaces and some bottom sides of the titanium particles, as illustrated in the schematic diagrams of FIGS. 6, 8, and 10. This catalyst layer formation is not present in the anode according to the comparative example.

When the same amount of catalyst layer is formed, the electrode 100 according to the embodiment exhibits improved durability and performance compared to comparative electrodes. Therefore, it is possible to reduce the amount of target material used during sputtering without increasing the amount of catalyst while maintaining high performance, which is advantageous from an economic perspective. The catalyst layer is present in larger quantities on the electrolyte membrane side and a smaller quantity exists slightly away from the electrolyte membrane. This configuration allows for the achievement of both high durability and electrolysis characteristics.

Although water electrolysis is used as an example, the electrode 100 according to this embodiment also exhibits improved durability and activity when used in electrolysis other than water electrolysis.

In the specification, some elements are represented only by chemical symbols for elements.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An electrode (100) comprising:
a support (1) comprising metal fibers (1A) or metal particles (1B), the support (1) comprising a first surface (A) and a second surface (B) located opposite the first surface (A); and
a catalyst layer (2) provided on the metal fibers (1A) or the metal particles (1B) on the first surface (A) side of the support (1), wherein
an average fiber diameter of the metal fibers (1A) and an average primary diameter of the metal particles (1B) are denoted as D,
a direction from the first surface (A) of the support (1) to the second surface (B) of the support (1) is a thickness direction (C) of the support (1), and
the catalyst layer (2) is provided at from the first surface (A) to a position at a minimum depth of 3×D or more and a position at a maximum depth of 10×D or less.

2. The electrode (100) according to claim 1, wherein
the average fiber diameter of the metal fibers (1A) is 1 [µm] or more and 500 [µm] or less, and
the average primary diameter of the metal particles (1B) is 1 [µm] or more and 500 [µm] or less.

3. The electrode (100) according to claim 1 or 2, wherein
the support (1) is a cloth comprising the metal fibers (1A) or a sintered body of the metal particles (1B).

4. The electrode (100) according to any one of claims 1 to 3, wherein
the metal fibers (1A) comprise titanium, and
the metal particles (1B) comprise titanium.

5. The electrode (100) according to any one of claims 1 to 4, wherein
a region from the first surface (A) of the support (1) to a depth of 1×D in the thickness direction (C) is defined as a first region (a),
a region from the first surface (A) of the support (1) to a depth of 2×D in the thickness direction is defined as a second region (b), and
an average thickness of the catalyst layer (2) in the first region (a) is greater than an average thickness of the catalyst layer (2) in the second region (b).

6. The electrode (100) according to any one of claims 1 to 4, wherein
a region from the first surface (A) of the support to a depth of 1×D in the thickness direction (C) is defined as a first region (a),
a region from the first surface (A) of the support (1) to a depth of 2×D in the thickness direction (C) is defined as a second region (b), and
an average thickness of the catalyst layer (2) in the second region (b) is 0.01 times or more and 0.5 times or less an average thickness of the catalyst layer (2) in the first region (a).

7. The electrode (100) according to any one of claims 1 to 6, wherein
a region from the first surface (A) of the support to a depth of 3×D in the thickness direction (C) is a third region (c),
a region from the first surface (A) of the support (1) to a depth of 10×D in the thickness direction (C) is a fourth region (d), and
an average thickness of the catalyst layer (2) in the fourth region (d) is 0.001 times or more and 0.2 times or less an average thickness of the catalyst layer (2) in the third region (c).

8. The electrode (100) according to any one of claims 1 to 7, wherein
the metal fibers (1A) are Intertwined and laminated in the thickness direction (C) of the support (1), and
the metal particles (1B) are agglomerated and laminated in the thickness direction (C) of the support (1).

9. The electrode (100) according to any one of claims 1 to 8, wherein
the catalyst layer (2) is also provided on surfaces of the metal fibers (1A) along the thickness direction (C), and
the catalyst layer (2) is also provided on surfaces of the metal particles (1B) along the thickness direction (C).

10. The electrode (100) according to any one of claims 1 to 9, wherein
the catalyst layer (2) is also provided on a surface of the metal fibers (1) in a direction facing the second surface (B) side of the support (1) in which the direction facing the second surface (B) side of the support (1) extends to the second surface (B) side from a direction vertical to the thickness direction (C) of the support (1) but excluding the vertical direction, and
the catalyst layer (2) is also provided on a surface of the metal particles (1B) in a direction facing the second surface (B) side of the support (1) in which the direction facing the second surface (B) side of the support (1) extends to the second surface (B) side from a direction vertical to the thickness direction (C) of the support (1) but excluding the vertical direction.

11. The electrode (100) according to any one of claims 1 to 9, wherein
the catalyst layer (2) is also provided on a surface of the metal fibers (1A) in a direction facing the second surface (B) side of the support (1) in which the direction facing the second surface (B) side of the support (1) extends to the second surface (B) side from a direction vertical to the thickness direction (C) of the support (1) but excluding the vertical direction,
the total amount of the catalyst layer (2) provided on the surface of the metal fibers (1) facing the second surface (2) side of the support (1) is 3 [wt%] or more and 30 [wt%] or less of the entire catalyst layer (2),
the catalyst layer (2) is also provided on the surface of the metal particles (1B) in a direction facing the second surface (B) side of the support (1) in which the direction facing the second surface (B) side of the support extends to the second surface (B) side from a direction vertical to the thickness direction (C) of the support (1) but excluding the vertical direction
the total amount of the catalyst layer (2) provided on the surface of the metal particles (1B) facing the second surface (B) side of the support (1) is 3 [wt%] or more and 30 [wt%] or less of the entire catalyst layer (2).

12. The electrode (100) according to any one of claims 1 to 11, wherein
a porosity of the support (1) is 30 [vol%] or more and 70 [vol%] or less.

13. The electrode (100) according to any one of claims 1 to 12, wherein
a porosity of the support (1) is 40 [vol%] or more and 60 [vol%] or less.

14. The electrode (100) according to any one of claims 1 to 13, wherein
the catalyst layer (2) comprises sheet layers (2A) and gap layers (2B) which are alternately laminated.

15. A membrane electrode assembly (200) comprising:
the electrode (100) according to any one of claims 1 to 14; and
an electrolyte membrane (13) which is in direct contact with the electrode (100) wherein
a portion of the catalyst layer (2) which is not in direct contact with the electrolyte membrane (13) is included.
